# EUROPEAN PATENT APPLICATION

(11) **EP 4 525 428 A1**
(43) Date of publication of application: **19.03.2025**
(21) Application number: 24158372.3
(22) Date of filing: 19.02.2024
(51) Int. Cl.: H04N 1/60, H04N 1/62

(54) **COLOR CONVERSION APPARATUS, COLOR-CONVERSION-TABLE GENERATING APPARATUS, PROGRAM, AND METHOD**

(30) Priority: 14.09.2023 JP 2023149230
(71) Applicant: FUJIFILM Business Innovation Corp., Minato-ku Tokyo (JP)
(72) Inventor: YOKOHASHI, Mami, Kanagawa (JP); IWAFUCHI, Toshihiro, Kanagawa (JP); KUBO, Masahiko, Kanagawa (JP); YAMAUCHI, Kaoru, Kanagawa (JP)
(74) Representative: Haseltine Lake Kempner LLP

(57) **Abstract**

A color conversion apparatus includes a processor configured to: in conversion of a signal value in a first color space to a signal value in a second color space, the signal value in the first color space representing an image, the signal value in the second color space including YMCK signals and at least one spot color signal, the YMCK signals corresponding to amounts, to be used, of color materials of YMCK colors, the at least one spot color signal corresponding to an amount, to be used, of color material of a spot color, the spot color being other than YMCK colors, set at least one spot-color conversion ratio in accordance with a property of an image that is to be printed by using the signal value in the second color space, the at least one spot-color conversion ratio being a ratio for converting the signal value in the first color space to the at least one spot color signal.

## Description

### Background

### (i) Technical Field

The present disclosure relates to a color conversion apparatus, a color-conversion-table generating apparatus, a program, and a method.

### (ii) Related Art

Japanese Unexamined Patent Application Publication No. 2012-205166 discloses a color conversion apparatus which uses a gray component replacement (GCR) conversion table in conversion of input image signals to device color signals for printing. The GCR conversion table is used to replace portions of C ink, M ink, and Y ink, which are chromatic color materials, with K ink. The color conversion apparatus evaluates color reproduction characteristics caused by the GCR conversion table, and generates images for visualizing the evaluation result.

Japanese Unexamined Patent Application Publication No. 2008-263579 discloses a print control apparatus. To satisfy a demand for print performance, the print control apparatus selects a color material set that is to be used in printing, and generates a conversion profile for converting image data from a first color space to a second color space that is expressed by using amounts of use of the color materials included in the color material set.

Assume the case where first-color-space signal values that represent an image are converted to second-color-space signal values that include YMCK signals, which are signal values of YMCK colors, and spot color signals, which are signal values of spot color which is other than YMCK colors, and where the second-color-space signal values are used to print an image. In this case, properties of a printed image depend on conversion ratios for converting first-color-space signal values to spot color signals in second-color-space signal values. In conversion of first-color-space signal values, which represent an image, to second-color-space signal values, if conversion ratios for converting the first-color-space signal values to spot color signals in the second-color-space signal values are uniform, properties of a printed image may be those which are not desired by a user.

### Summary

Accordingly, it is an object of the present disclosure to provide a technique for facilitating obtaining an image having user-desired properties, compared with the case in which conversion ratios for converting signal values in a first color space to spot color signals in signal values in a second color space are uniform.

According to a first aspect of the present disclosure, there is provided a color conversion apparatus comprising: a processor configured to: in conversion of a signal value in a first color space to a signal value in a second color space, the signal value in the first color space representing an image, the signal value in the second color space including YMCK signals and at least one spot color signal, the YMCK signals corresponding to amounts, to be used, of color materials of YMCK colors, the at least one spot color signal corresponding to an amount, to be used, of color material of a spot color, the spot color being other than YMCK colors, set at least one spot-color conversion ratio in accordance with a property of an image that is to be printed by using the signal value in the second color space, the at least one spot-color conversion ratio being a ratio for converting the signal value in the first color space to the at least one spot color signal.

According to a second aspect of the present disclosure, in the color conversion apparatus according to the first aspect, the processor is configured to: set a K-color conversion ratio and the at least one spot-color conversion ratio in accordance with the property of the image that is to be printed by using the signal value in the second color space, the K-color conversion ratio being a ratio for converting the signal value in the first color space to a K-color signal.

According to a third aspect of the present disclosure, in the color conversion apparatus according to the second aspect, the processor is configured to: set the at least one spot-color conversion ratio and the K-color conversion ratio in conjunction with each other in accordance with the property of the image that is to be printed by using the signal value in the second color space.

According to a fourth aspect of the present disclosure, in the color conversion apparatus according to the third aspect, the processor is configured to: when the at least one spot-color conversion ratio is changed to decrease the amount, to be used, of color material of the spot color from a predetermined reference value, change the K-color conversion ratio to increase an amount, to be used, of color material of K color.

According to a fifth aspect of the present disclosure, in the color conversion apparatus according to the third or fourth aspect, the processor is configured to: when the at least one spot-color conversion ratio is changed to increase the amount, to be used, of color material of the spot color from a predetermined reference value, not change the K-color conversion ratio.

According to a sixth aspect of the present disclosure, in the color conversion apparatus according to any of the first to fifth aspects, the at least one spot color signal comprises a plurality of spot color signals. The at least one spot-color conversion ratio comprises a plurality of spot-color conversion ratios. The processor is configured to: in conversion of the signal value in the first color space to the signal value in the second color space, the signal value in the second color space including the YMCK signals and the plurality of spot color signals, the plurality of spot color signals corresponding to amounts, to be used, of color materials of a plurality of types of spot color, set the plurality of spot-color conversion ratios individually in accordance with the property of the image that is to be printed by using the signal value in the second color space, the plurality of spot-color conversion ratios being ratios for converting the signal value in the first color space to the respective spot color signals.

According to a seventh aspect of the present disclosure, in the color conversion apparatus according to any of the first to sixth aspects, the processor is configured to: cause a display unit to display a display image describing a correspondence between the amount, to be used, of color material of the spot color and the property of the image that is to be printed by using the signal value in the second color space, the display unit displaying information.

According to an eighth aspect of the present disclosure, in the color conversion apparatus according to the seventh aspect, the processor is configured to: obtain information about the amount, to be used, of color material of the spot color in accordance with an operation on the display image; and set the at least one spot-color conversion ratio on a basis of the amount, to be used, of color material of the spot color.

According to a ninth aspect of the present disclosure, in the color conversion apparatus according to the eighth aspect, the processor is configured to: after an amount, to be used, of color material of K color is set in conjunction with the amount, to be used, of color material of the spot color which has been obtained in accordance with the operation on the display image, set the amount, to be used, of color material of the spot color or the amount, to be used, of color material of K color separately in accordance with an operation on the display image; set the at least one spot-color conversion ratio on a basis of the amount, to be used, of color material of the spot color; and set a K-color conversion ratio on a basis of the amount, to be used, of color material of K color, the K-color conversion ratio being a ratio for converting the signal value in the first color space to a K-color signal.

According to a tenth aspect of the present disclosure, in the color conversion apparatus according to any of the first to ninth aspects, the processor is configured to: set the at least one spot-color conversion ratio in accordance with a property of a specific area in the image that is to be printed by using the signal value in the second color space, the specific area satisfying a predetermined condition, the at least one spot-color conversion ratio being used to convert the signal value in the first color space to the at least one spot color signal, the signal value in the first color space representing the specific area.

According to an eleventh aspect of the present disclosure, there is provided a color-conversion-table generating apparatus comprising: a processor configured to: generate a color conversion table, the color conversion table being used to convert a signal value in a first color space to a signal value in a second color space, the signal value in the first color space representing an image, the signal value in the second color space including YMCK signals and a spot color signal, the YMCK signals corresponding to amounts, to be used, of color materials of YMCK colors, the spot color signal corresponding to an amount, to be used, of color material of spot color, the spot color being other than the YMCK colors, the color conversion table being a table in which a spot-color conversion ratio is determined in accordance with a property of an image that is to be printed by using the signal value in the second color space, the spot-color conversion ratio being a ratio for converting the signal value in the first color space to the spot color signal.

According to a twelfth aspect of the present disclosure, there is provided a program causing a computer to execute a process comprising: in conversion of a signal value in a first color space to a signal value in a second color space, the signal value in the first color space representing an image, the signal value in the second color space including YMCK signals and a spot color signal, the YMCK signals corresponding to amounts, to be used, of color materials of YMCK colors, the spot color signal corresponding to an amount, to be used, of color material of a spot color, the spot color being other than YMCK colors, setting a spot-color conversion ratio in accordance with a property of an image that is to be printed by using the signal value in the second color space, the spot-color conversion ratio being a ratio for converting the signal value in the first color space to the spot color signal.

According to a thirteenth aspect of the present disclosure, there is provided a method comprising: in conversion of a signal value in a first color space to a signal value in a second color space, the signal value in the first color space representing an image, the signal value in the second color space including YMCK signals and a spot color signal, the YMCK signals corresponding to amounts, to be used, of color materials of YMCK colors, the spot color signal corresponding to an amount, to be used, of color material of a spot color, the spot color being other than YMCK colors, setting a spot-color conversion ratio in accordance with a property of an image that is to be printed by using the signal value in the second color space, the spot-color conversion ratio being a ratio for converting the signal value in the first color space to the spot color signal.

Compared with the case in which the conversion ratio for converting signal values in the first color space to spot color signals in signal values in the second color space is uniform, the color conversion apparatus according to the first aspect facilitates obtaining images having user-desired properties.

Compared with the case in which the conversion ratio for converting signal values in the first color space to K-color signals in signal values in the second color space is uniform, the color conversion apparatus according to the second aspect facilitates obtaining an image having user-desired properties.

Compared with the case in which the spot-color conversion ratio and the K-color conversion ratio are set so as not to be in conjunction with each other, the color conversion apparatus according to the third aspect enables an image, which has user-desired properties, to be obtained with a simpler operation.

Compared with the case in which, when the spot-color conversion ratio is changed so that the amount, to be used, of color material of the spot color is decreased from the reference value, the K-color conversion ratio is changed so that the amount, to be used, of color material of K color is decreased, the color conversion apparatus according to the fourth aspect facilitates improving image light fastness and cost required for image printing, which serve as image properties.

Compared with the case in which, when the spot-color conversion ratio is changed so that the amount, to be used, of color material of the spot color is increased from the reference value, the K-color conversion ratio is changed so that the amount, to be used, of color material of K color is increased, the color conversion apparatus according to the fifth aspect facilitates improving image granularity serving as an image property.

Compared with the case in which multiple spot-color conversion ratios are set uniformly, the color conversion apparatus according to the sixth aspect facilitates obtaining an image having user-desired properties.

Compared with the case in which correspondences between the amount, to be used, of color material of the spot color and image properties are not displayed by the display unit, the color conversion apparatus according to the seventh aspect facilitates a user's grasp of the difference in image property due to change of the amount, to be used, of color material of the spot color.

The color conversion apparatus according to the eighth aspect enables a user to set the amount, to be used, of color material of the spot color through operations on a display image while the user sees correspondences between the amount, to be used, of color material of the spot color and image properties, which are displayed by the display unit.

Compared with the case in which information about the amount, to be used, of color material of the spot color and information about the amount, to be used, of color material of K color are not obtained individually, the color conversion apparatus according to the ninth aspect facilitates obtaining an image having user-desired properties.

Compared with the case in which the spot-color conversion ratio for converting signal values in the first color space, which represent a specific area, to spot color signals is not set in accordance with the properties of the specific area, the color conversion apparatus according to the tenth aspect facilitates obtaining an image having user-desired properties.

Compared with the case in which the conversion ratio for converting signal values in the first color space to spot color signals in signal values in the second color space is uniform, the color-conversion-table generating apparatus according to the eleventh aspect facilitates obtaining an image having user-desired properties.

Compared with the case in which the conversion ratio for converting signal values in the first color space to spot color signals in signal values in the second color space is uniform, the program according to the twelfth aspect and the method according to the thirteenth aspect facilitate obtaining an image having user-desired properties.

### Brief Description of the Drawings

Exemplary embodiment of the present disclosure will be described in detail based on the following figures, wherein:
Fig. 1 is a diagram for describing the configuration of a print system to which the present exemplary embodiment is applied;
Fig. 2 is a diagram illustrating functional blocks of a color conversion apparatus;
Fig. 3 is a diagram illustrating an exemplary setting screen that a profile generating unit of a color conversion apparatus causes an operation/display unit to display;
Fig. 4 is a diagram illustrating the relationship between spot-color toner amount and K-color toner amount which are specified in conjunction with each other in accordance with operations on a toner-amount specifying component;
Fig. 5 is a diagram illustrating a setting screen displayed after the control of a toner-amount specifying component is moved to left due to a user operation from the state illustrated in Fig. 3; and
Fig. 6 is a flowchart of an exemplary process of generating a color conversion profile, which is performed by a profile generating unit.

### Detailed Description

An exemplary embodiment of the present disclosure will be described below by referring to the attached drawings.

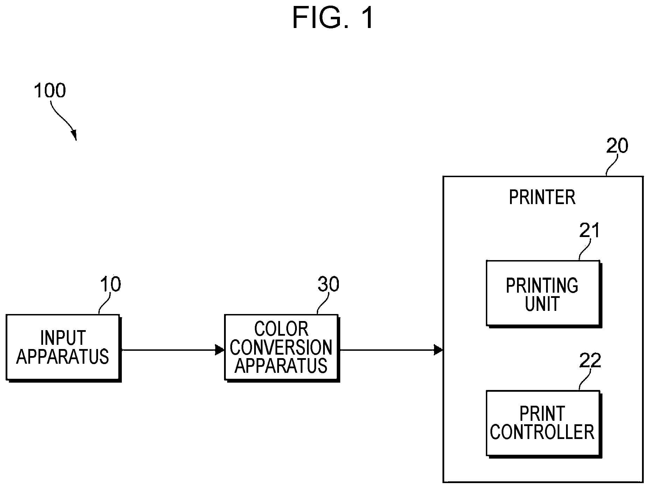

Fig. 1 is a diagram for describing the configuration of a print system 100 to which the present exemplary embodiment is applied.

The print system 100 illustrated in Fig. 1 includes an input apparatus 10, a printer 20, and a color conversion apparatus 30. The input apparatus 10, the printer 20, and the color conversion apparatus 30 are communicatively connected to each other.

As a network which connects the input apparatus 10, the printer 20, and the color conversion apparatus 30 to each other, for example, a local area network (LAN) or the Internet is used. The network may have a combined configuration of a LAN and the Internet.

The input apparatus 10 is constituted by a computer. The input apparatus 10 inputs, to the color conversion apparatus 30, image data that is to be used in printing performed by the printer 20.

The printer 20 prints images on sheets, which are an exemplary recording medium, on the basis of image data which has been input by the input apparatus 10 and on which the color conversion apparatus 30 has performed color conversion processing. The printer 20 includes a printing unit 21, which performs printing, and a print controller 22, which controls operations of the printing unit 21 on the basis of image data generated by the color conversion apparatus 30.

The printing unit 21 prints images on sheets, for example, by using an electrophotographic system. The printing unit 21 according to the present exemplary embodiment uses toners of yellow (Y), magenta (M), cyan (C), and black (K) (hereinafter these colors may be denoted as normal colors) and a toner of a spot color, which is different from the normal colors, to print images on sheets. Toner is an exemplary color material used in image formation. The spot color is different from the normal colors. The spot color may be, for example, difficult to be produced by using the toners of yellow, magenta, cyan, and black, which are normal colors. Examples of the spot color include, not only fluorescent pink, fluorescent yellow, white, light cyan, orange, violet, and green, but also metallic colors, such as gold color and silver color, which are tinted with metal pigments. However, the spot color is not limited to these. In the present exemplary embodiment, the case in which the printing unit 21 forms images by using, in addition to the normal colors, a toner of fluorescent pink (P) as a spot color will be described as an example.

As long as the printing unit 21 uses color materials of yellow (Y), magenta (M), cyan (C), and black (K), which are normal colors, and color material of one or more spot colors to form images on sheets, the print format and the type of color material are not particularly limited. The printing unit 21 may print images on sheets, instead of by using an electrophotographic system as described above, for example, by using an inkjet system, a thermal transfer system, or an offset printing.

In the description below, yellow (Y), magenta (M), cyan (C), and black (K), which are normal colors, may be denoted as YMCK color. A combination of YMCK color and the spot color of fluorescent pink (P), which is used in printing performed by the printer 20, may be denoted as YMCKP color.

The color conversion apparatus 30, which is an exemplary color conversion apparatus or an exemplary color-conversion-table generating apparatus, is constituted by a computer. The color conversion apparatus 30 may be physically a single computer or may be implemented through distribution processing performed by multiple computers. The color conversion apparatus 30 may be constituted as a shared server which provides a so-called cloud service, or may be constituted as an on-premises server.

The color conversion apparatus 30 may be embedded, as a part of the printer 20, in the printer 20.

In the print system 100 according to the present exemplary embodiment, image data represented by signal values in the RGB color space is input from the input apparatus 10 to the color conversion apparatus 30. The color conversion apparatus 30 converts input signal values in the RGB color space to signal values in the YMCKP color space used by the printer 20. The color conversion apparatus 30 outputs, to the printer 20, image data represented by signal values in the YMCKP color space. The printer 20 prints images on sheets by using the tonners of Y, M, C, K, and P colors on the basis of image data obtained from the color conversion apparatus 30.

A signal value in the YMCKP color space includes signal values of YMCK colors, which correspond to amounts, to be used, of the toners of YMCK colors, and a signal value of P color, which corresponds to an amount, to be used, of the toner of P color which is a spot color. Signal values of the respective YMCK colors refer to an exemplary YMCK color signal; a signal value of P color refers to an exemplary spot color signal. A signal value of each color in the YMCKP color space is associated with an amount, to be used by the printing unit 21 of the printer 20, of the tonner of the corresponding color. A signal value of each color in the YMCKP color space is expressed, for example, by using a numeric value between 0% and 100%.

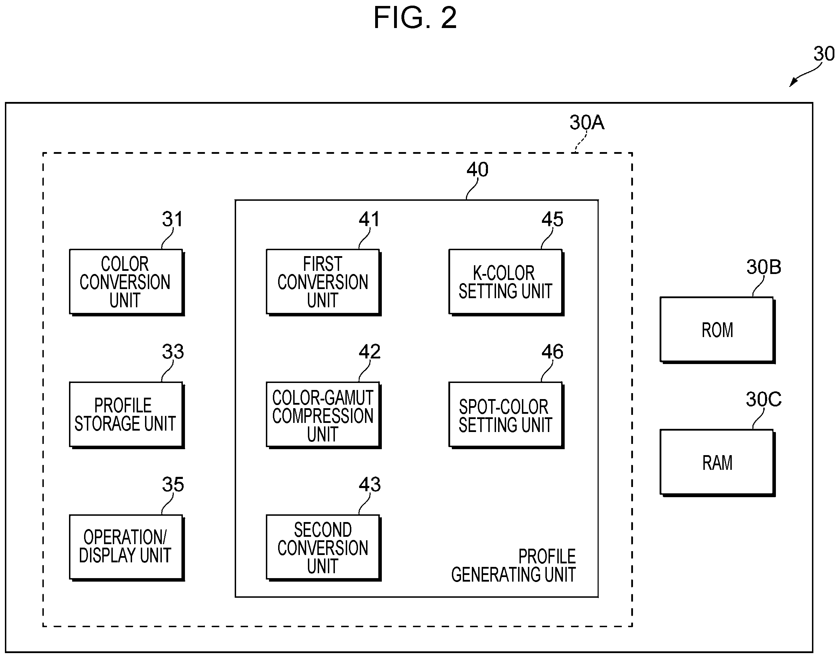

Fig. 2 is a diagram illustrating functional blocks of the color conversion apparatus 30.

The color conversion apparatus 30 includes a color conversion unit 31, which performs color conversion processing on image data received from the input apparatus 10, and a profile generating unit 40, which generates a color conversion profile used in color conversion processing performed by the color conversion unit 31, a profile storage unit 33, which stores a color conversion profile generated by the profile generating unit 40, and an operation/display unit 35, which displays information to users and receives input of information through user operations. The operation/display unit 35 is an exemplary display unit.

The functions of the color conversion unit 31 and the profile generating unit 40 of the color conversion apparatus 30 are implemented by using a central processing unit (CPU) 30A which is an exemplary processor. The CPU 30A reads programs stored in a read only memory (ROM) 30B, and executes programs by using a random access memory (RAM) 30C as a work area. Programs executed by the CPU 30A may be provided to the color conversion apparatus 30 in such a manner that the programs are stored in a computer-readable recording medium, such as a magnetic recording medium (for example, a magnetic tape or a magnetic disk), an optical recording medium (for example, an optical disk), a magneto-optical recording medium, or a semiconductor memory. Programs executed by the CPU 30A may be downloaded to the color conversion apparatus 30 by using a communication unit such as the Internet.

In the present exemplary embodiment, the functions of the color conversion unit 31 and the profile generating unit 40 of the color conversion apparatus 30 are implemented through software. However, the configuration is not limited to this. For example, the functions may be implemented by using an application specific integrated circuit (ASIC).

The profile generating unit 40 generates a color conversion profile for converting signal values in the RGB color space, which represent image data received from the input apparatus 10, to signal values in the YMCKP color space, with which the color is reproducible by the printer 20. A color conversion profile generated by the profile generating unit 40 is an exemplary color conversion table for converting signal values in a first color space, which represent an image, to signal values in a second color space. Each signal value in the second color space includes YMCK signals, which correspond to amounts, to be used, of color materials of YMCK colors, and a spot color signal, which corresponds to an amount, to be used, of a color material of a spot color which is a color other than YMCK colors.

The profile generating unit 40 includes a first conversion unit 41 which converts signal values in the RGB color space to signal values in a color space independent of devices, such as the input apparatus 10 and the printer 20. The first conversion unit 41 according to the present exemplary embodiment converts signal values in the RGB color space to signal values in the L*a*b* color space which is a device-independent color space. The L*a*b* color space is expressed as an orthogonal-coordinates color space whose axes represent brightness L*, chromaticity a*, and chromaticity b*. The RGB color space or the L*a*b* color space is an exemplary first color space.

The profile generating unit 40 includes a color-gamut compression unit 42 which compresses signal values in the L*a*b* color space, which are obtained through conversion performed by the first conversion unit 41, to signal values in the color gamut of the printer 20 in the same L*a*b* color space.

The profile generating unit 40 includes a second conversion unit 43 which converts signal values in the L*a*b* color space, which have been compressed by the color-gamut compression unit 42, to signal values in the YMCKP color space, with which the color is reproducible by the printer 20. The YMCKP color space is an exemplary second color space.

The second conversion unit 43 determines the K-color signal value in each signal value in the YMCKP color space on the basis of a conversion ratio with respect to a K-color signal value, which is set by a K-color setting unit 45 described below. The second conversion unit 43 determines the P-color signal value in each signal value in the YMCKP color space on the basis of a conversion ratio to a P-color signal value, which is set by a spot-color setting unit 46 described below.

The profile generating unit 40 includes the K-color setting unit 45 which sets the conversion ratio with respect to a K-color signal value, which is used in conversion of a signal value in the L*a*b* color space to a signal value in the YMCKP color space. In the description below, the conversion ratio with respect to a K-color signal value, which is used in conversion of a signal value in the L*a*b* color space to a signal value in the YMCKP color space, is denoted as the K-color conversion ratio.

In the printer 20 which prints an image by using color materials including those of YMCK colors, portions of the color materials of YMC colors may be replaced with the color material of K color. The K-color conversion ratio means a ratio of replacement of a signal value of YMC color with a signal value of K color in conversion of a signal value in the L*a*b* color space to a signal value in the YMCKP color space.

In the present exemplary embodiment, the K-color conversion ratio is expressed, for example, as a numeric value between 0% and 100%. A K-color conversion ratio of 0% indicates the case in which a YMCKP-color-space signal value, which reproduces a certain color, is to have the lowest K-color signal value. A K-color conversion ratio of 100% indicates the case in which a YMCKP-color-space signal value, which reproduces a certain color, is to have the highest K-color signal value.

The profile generating unit 40 includes the spot-color setting unit 46 which sets a conversion ratio with respect to a spot color signal value, which is used in conversion of a signal value in the L*a*b* color space to a signal value in the YMCKP color space. In the present exemplary embodiment, the spot-color setting unit 46 sets, as the conversion ratio with respect to a spot color signal value, the conversion ratio with respect to a P-color signal value, which is used in conversion of a signal value in the L*a*b* color space to a signal value in the YMCKP color space. In the description below, the conversion ratio with respect to a spot color signal value, which is used in conversion of a signal value in the L*a*b* color space to a signal value in the YMCKP color space, is denoted as the spot-color conversion ratio.

In the printer 20 which prints an image by using, in addition to the color materials of YMCK colors which are normal colors, a color material of P color which is a spot color, portions of the color materials of YMCK colors may be replaced with the color material of P color. The spot-color conversion ratio means a ratio of replacement of a signal value of YMCK color with a signal value of P color in conversion of a signal value in the L*a*b* color space to a signal value in the YMCKP color space. In the printer 20, even when the amounts of replacement of the color materials of YMCK colors with the color material of P color are different from each other, the amounts, to be used, of the color materials of YMCK colors and the amount, to be used, of the color material of P color are adjusted, achieving reproduction of an image of the same color.

In the present exemplary embodiment, the spot-color conversion ratio is expressed, for example, as a numeric value between 0% and 100%. A spot-color conversion ratio of 0% indicates the case in which a YMCKP-color-space signal value, which reproduces a certain color, is to have the lowest P-color signal value. A spot-color conversion ratio of 100% indicates the case in which a YMCKP-color-space signal value, which reproduces a certain color, is to have the highest P-color signal value.

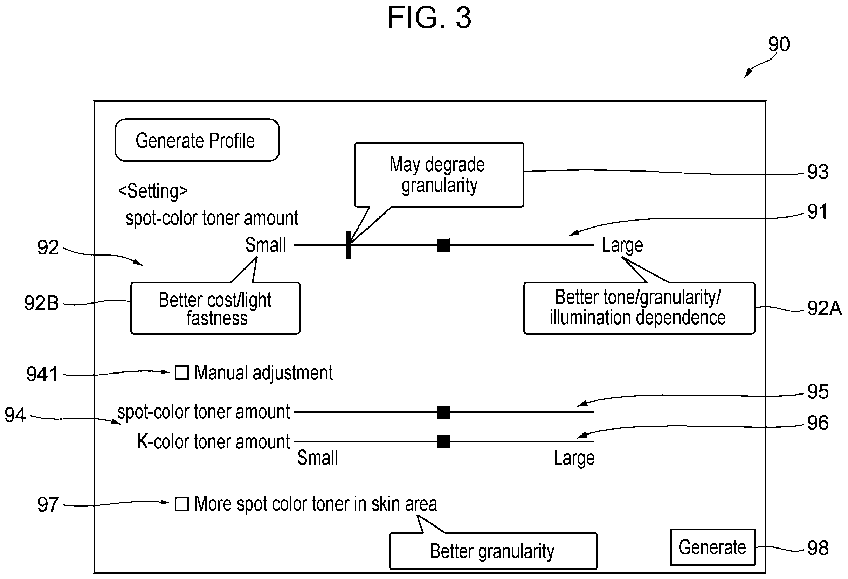

The K-color setting unit 45 and the spot-color setting unit 46 cause the operation/display unit 35 of the color conversion apparatus 30 to display a setting screen 90 (see Fig. 3 described below) for specifying the amount, to be used, of the color material of K color and the amount, to be used, of the color material of spot color.

In response to user operations on the setting screen 90, the K-color setting unit 45 obtains information about the amount, to be used, of the color material of K color. In the present exemplary embodiment, the K-color setting unit 45 obtains information about a K-color toner amount as exemplary information about the amount, to be used, of the color material of K color. The K-color setting unit 45 sets the K-color conversion ratio on the basis of the obtained information about a K-color toner amount.

In response to user operations on the setting screen 90, the spot-color setting unit 46 obtains information about the amount, to be used, of the color material of spot color. In the present exemplary embodiment, the spot-color setting unit 46 obtains information about a P-color toner amount as exemplary information about the amount, to be used, of the color material of spot color. The spot-color setting unit 46 sets the spot-color conversion ratio on the basis of the obtained information about a P-color toner amount.

In the printer 20 which prints an image by using the color materials of YMCK colors, which are normal colors, and the color material of spot color, as described above, even with a different amount of use of color material of spot color, an image of the same color may be reproduced. In other words, even when the color conversion apparatus 30 uses a different spot-color conversion ratio to convert signal values in the L*a*b* color space to signal values in the YMCKP color space, the printer 20 may reproduce an image of the same color.

As described above, even with different amounts of replacement of the color materials of YMC colors with the color material of K color, the printer 20 may reproduce an image of the same color. In other words, even when the color conversion apparatus 30 uses a different K-color conversion ratio to convert signal values in the L*a*b* color space to signal values in the YMCKP color space, the printer 20 may reproduce an image of the same color.

In the present exemplary embodiment, the state in which the color of a first image printed by the printer 20 matches that of a second image printed by the printer 20 means that the signal values obtained when a colorimeter (not illustrated) is used to measure the color of the first image match those of the second image.

Even when images printed by the printer 20 have the same reproduced colors, the images are different in property depending on the magnitude of the spot-color conversion ratio or the K-color conversion ratio which is used by the color conversion apparatus 30. Specifically, for example, the amounts of color material of YMCK colors and color material of P color which are used in image printing performed by the printer 20, and the total amount of the color materials used in image printing vary depending on the magnitude of the spot-color conversion ratio or the K-color conversion ratio. This may cause images, which are printed by the printer 20, to be different in property.

An image property, which changes depending on the magnitude of the spot-color conversion ratio or the K-color conversion ratio, may be image light fastness. Image light fastness indicates how hardly an image degrades due to exposure to light. Typically, compared with color materials of YMCK colors, which are normal colors, a color material of P color, which is a spot color, is susceptible to degradation such as color fading due to exposure to light. Replacement of color material of YMC colors with color material of K color causes the total amount of color material, which is used for an image, to be decreased, and degradation such as color fading due to exposure to light is likely to be inconspicuous. Therefore, image light fastness tends to be better as the spot-color conversion ratio is lower. Image light fastness tends to be better as the K-color conversion ratio is higher.

An image property, which changes depending on the magnitude of the spot-color conversion ratio or the K-color conversion ratio, may be cost required for image printing. Typically, compared with color materials of YMCK colors, which are normal colors, a color material of spot color tends to have an expensive per-unit price. Therefore, a larger amount of use of color material of spot color is likely to cause a higher cost required for image printing. Replacement of color material of YMC colors with color material of K color causes the total amount of the color materials, which is used in an image, to be decreased. Thus, the cost required for image printing is likely to be low. Therefore, the cost required for image printing tends to be reduced as the spot-color conversion ratio is lower. The cost required for image printing tends to be reduced as the K-color conversion ratio is higher.

An image property, which changes depending on the magnitude of the spot-color conversion ratio or the K-color conversion ratio, may be image tone. Image tone indicates the smoothness of change in shade in an image. Image tone is good when the amounts of color materials of YMCK colors, which are normal colors, and P color, which is a spot color, do not change abruptly. Therefore, image tone tends to be better as the spot-color conversion ratio and the K-color conversion ratio are higher.

An image property, which changes depending on the magnitude of the spot-color conversion ratio or the K-color conversion ratio, may be the illumination dependence of an image. An image printed by the printer 20 may have a different visible tint depending on illumination in the environment in which the image is placed. The illumination dependence of an image indicates how hardly the tint changes depending on illumination. Specifically, as the illumination dependence of an image is better, a difference between the visible tints of an image hardly occurs even when illumination is different. Compared with color materials of YMC colors, a color material of spot color and a color material of K color tend to hardly cause a difference between tints which occurs due to difference of illumination. Therefore, the illumination dependence of an image tends to be better as the spot-color conversion ratio is higher. The illumination dependence of an image tends to be better as the K-color conversion ratio is higher.

An image property, which changes depending on the magnitude of the spot-color conversion ratio or the K-color conversion ratio, may be image granularity. In some printing systems, the printer 20 may form an image by applying a color material on a sheet in dots. Image granularity indicates how hardly the dots of a color material, with which the image is formed, are conspicuous. Specifically, as image granularity is better, a smooth image, in which the dots of a color material are inconspicuous, is likely to be presented. For example, an image, which illustrates human skin or the sky, may need a good image granularity. Image granularity tends to be better as the spot-color conversion ratio is higher. Image granularity tends to be better as the K-color conversion ratio is lower.

Thus, images printed by the printer 20 are different in property depending on the spot-color conversion ratio and the K-color conversion ratio used in the color conversion apparatus 30's conversion of signal values of input image data to YMCKP-color-space signal values. In the color conversion apparatus 30's conversion of signal values of input image data to YMCKP-color-space signal values, for example, if the spot-color conversion ratio is set to be uniform, an image printed by the printer 20 may be different in property from one desired by a user.

In contrast, the color conversion apparatus 30 according to the presented exemplary embodiment sets the spot-color conversion ratio in accordance with properties of an image which is to be printed by the printer 20. More specifically, the color conversion apparatus 30 according to the present exemplary embodiment obtains information about the amount, to be used in image printing performed by the printer 20, of the color material of spot color, for example, in accordance with user-desired image properties. The color conversion apparatus 30 sets the spot-color conversion ratio on the basis of the obtained information about the amount, to be used, of the color material of spot color, and generates a color conversion profile. Further, the color conversion apparatus 30 uses the generated color conversion profile to perform color conversion processing on image data received from the input apparatus 10, and outputs, to the printer 20, the image data obtained after the color conversion processing.

Fig. 3 is a diagram illustrating an exemplary setting screen 90 that the profile generating unit 40 of the color conversion apparatus 30 causes the operation/display unit 35 to display. The setting screen 90 illustrated in Fig. 3 is used for a user to specify the amounts, to be used, of spot-color toner and K-color toner in an image that is to be printed by the printer 20. In the description below, the amount, to be used, of spot-color toner in an image that is to be printed by the printer 20 is denoted as a spot-color toner amount. The amount, to be used, of K-color toner in an image that is to be printed by the printer 20 is denoted as a K-color toner amount. The spot-color toner amount is an exemplary amount, to be used, of color material of spot color; the K-color toner amount is an exemplary amount, to be used, of color material of K color.

As illustrated in Fig. 3, the setting screen 90 includes a toner-amount specifying component 91 for a user to specify the spot-color toner amount. The toner-amount specifying component 91 includes a slider for specifying the spot-color toner amount through a move of a control to the left and to the right. Specifically, a user moves the control of the toner-amount specifying component 91 to the left and to the right, and thus specifies the spot-color toner amount. In the toner-amount specifying component 91 in Fig. 3, when the control is moved to the left, a smaller spot-color toner amount is specified; when the control is moved to the right, a larger spot-color toner amount is specified.

In the present exemplary embodiment, when the spot-color toner amount, which is specified through an operation on the toner-amount specifying component 91, is changed, the set K-color toner amount, to be specified, is also changed in conjunction with the spot-color toner amount. That is, in the setting screen 90 according to the present exemplary embodiment, both the spot-color toner amount and the K-color toner amount may be specified through an operation on the toner-amount specifying component 91.

In this example, in the state in which a user has not operated the toner-amount specifying component 91 (for example, as in Fig. 3, in the state in which the control of the toner-amount specifying component 91 is located at the center), the spot-color toner amount and the K-color toner amount, which are to be specified by using the toner-amount specifying component 91, are set to predetermined reference values.

As long as the spot-color toner amount may be specified through user operations, the toner-amount specifying component 91 is not limited to the slider illustrated in Fig. 3. For example, the toner-amount specifying component 91 may have a form of direct input of the spot-color toner amount, or may have a form of selection from predetermined options indicating the magnitude of the spot-color toner amount (for example, "Large" and "Small").

The same is true for a spot-color-toner amount specifying component 95 and a K-color-toner amount specifying component 96 described below.

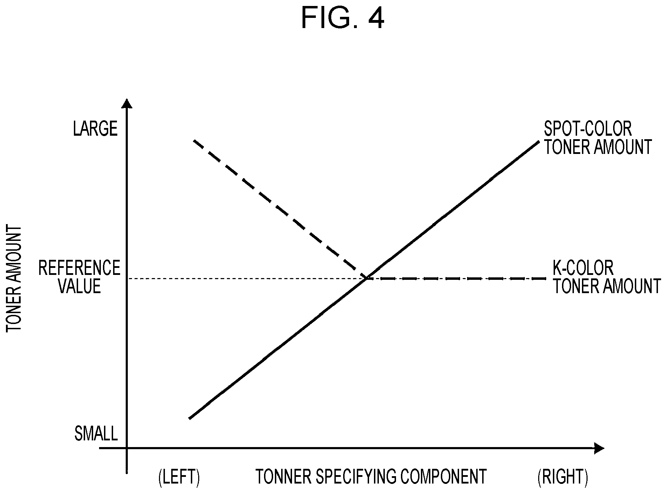

Fig. 4 is a diagram illustrating the relationship between the spot-color toner amount and the K-color toner amount which are specified in conjunction with each other in accordance with operations on the toner-amount specifying component 91.

As described above, among properties of an image printed by the printer 20, image light fastness and cost required for image printing tend to be better as the spot-color conversion ratio is lower. Image light fastness and cost required for image printing tend to be better as the K-color conversion ratio is higher. Therefore, in the present exemplary embodiment, when the control of the toner-amount specifying component 91 is moved to the left to decrease the spot-color toner amount from the reference value, the K-color toner amount is increased, in conjunction with the spot-color toner amount, from the reference value.

As described above, among properties of an image printed by the printer 20, image tone, the illumination dependence of an image, and image granularity tend to be better as the spot-color conversion ratio is higher. Image tone and the illumination dependence of an image are likely to be better as the K-color conversion ratio is higher. In contrast, image granularity is likely to be worse as the K-color conversion ratio is higher. That is, when the spot-color conversion ratio is high, if the K-color conversion ratio is high, there are improved image quality properties and worsened image quality properties. Therefore, in the present exemplary embodiment, when the control of the toner-amount specifying component 91 is moved to the right so that the spot-color toner amount is increased from the reference value, the K-color toner amount is not changed from the reference value.

Thus, in the present exemplary embodiment, through operations on the toner-amount specifying component 91, both the spot-color toner amount and the K-color toner amount may be specified in accordance with the image properties, which change depending on the magnitude of the spot-color toner amount and that of the K-color toner amount. Thus, for example, compared with the case in which the spot-color toner amount and the K-color toner amount are individually specified, the spot-color toner amount and the K-color toner amount may be specified through a simple operation.

Back to Fig. 3, the setting screen 90 includes a property display portion 92 for describing correspondences between the spot-color toner amount, which is specified by using the toner-amount specifying component 91, and properties of an image that is to be printed by the printer 20. The property display portion 92 includes a first property display portion 92A for describing image properties affected by an increase of the spot-color toner amount, and a second property display portion 92B for describing image properties affected by a decrease of the spot-color toner amount.

The first property display portion 92A and the second property display portion 92B according to the present exemplary embodiment are used to describe, as correspondences between the spot-color toner amount and image properties, image properties which will get better when the spot-color toner amount is changed. More specifically, in the first property display portion 92A, a text, "Better tone/granularity/illumination dependence", is described as exemplary image properties affected by an increase of the spot-color toner amount. In the second property display portion 92B, a text, "Better cost/light fastness", is described as exemplary image properties affected by a decrease of the spot-color toner amount.

In the present exemplary embodiment, the property display portion 92 included in the setting screen 90 enables a user to grasp what kinds of properties an image to be printed by the printer 20 will have when the spot-color toner amount is changed. While referring to the image properties displayed in the property display portion 92, a user may specify the spot-color toner amount by using the toner-amount specifying component 91.

Thus, for example, compared with the case in which the setting screen 90 does not include the property display portion 92, an image having user-desired properties is easily obtained.

In the property display portion 92, image properties, which get worse when the spot-color toner amount is changed, may be described as the correspondences between the spot-color toner amount and image properties.

The setting screen 90 includes a property notification 93 for notifying a user that image properties will get worse when the spot-color toner amount is changed excessively by using the toner-amount specifying component 91. The property notification 93 is displayed on the setting screen 90 when the spot-color toner amount is changed excessively by using the toner-amount specifying component 91. The property notification 93 according to the present exemplary embodiment provides a notification, "May degrade granularity", when the spot-color toner amount is changed by using the toner-amount specifying component 91 to be smaller than a predetermined threshold.

In the present exemplary embodiment, the property notification 93 included in the setting screen 90 enables a user to grasp that image properties will get worse when the spot-color toner amount is changed excessively by using the toner-amount specifying component 91. Thus, when a user does not want to worsen image properties, occurrence of excess change of the spot-color toner amount using the toner-amount specifying component 91 is suppressed. For example, compared with the case in which the setting screen 90 does not include the property notification 93, an image having user-desired properties is easily obtained.

The setting screen 90 includes an individual-toner specifying component 94 for specifying the spot-color toner amount and the K-color toner amount individually. The individual-toner specifying component 94 includes a check field 941 for a user to select it when the spot-color toner amount and the K-color toner amount are to be specified individually. The individual-toner specifying component 94 also includes the spot-color-toner amount specifying component 95 for a user to specify the spot-color toner amount separately. The individual-toner specifying component 94 further includes the K-color-toner amount specifying component 96 for a user to specify the K-color toner amount separately.

The spot-color-toner amount specifying component 95 includes a slider for specifying the spot-color toner amount with a control being moved to the left and to the right. Similarly, the K-color-toner amount specifying component 96 includes a slider for specifying the K-color toner amount with a control being moved to the left and to the right.

In the setting screen 90 according to the present exemplary embodiment, when the check field 941 of the individual-toner specifying component 94 is not selected, the control of the spot-color-toner amount specifying component 95 and that of the K-color-toner amount specifying component 96 are moved in accordance with operations on the toner-amount specifying component 91.

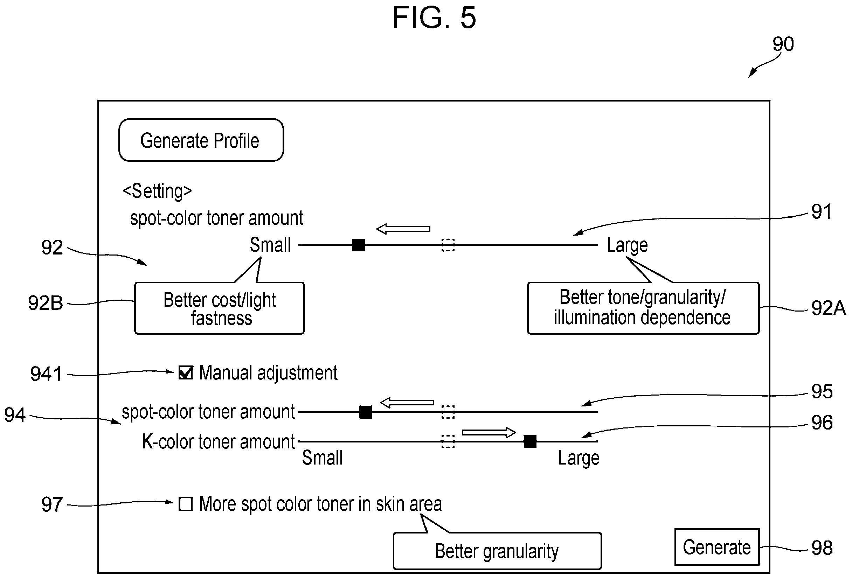

Fig. 5 is a diagram illustrating the setting screen 90 obtained after the control of the toner-amount specifying component 91 is moved to the left through a user operation from the state illustrated in Fig. 3.

As described above, when the control of the toner-amount specifying component 91 is moved to the left, the spot-color toner amount, to be specified, is decreased from the reference value. With the move of the control of the toner-amount specifying component 91, the control of the spot-color-toner amount specifying component 95 of the individual-toner specifying component 94 is moved from the center to the left.

When the control of the toner-amount specifying component 91 is moved to the left and the spot-color toner amount, to be specified, is decreased from the reference value, the K-color toner amount, to be specified, is increased from the reference value in conjunction with the spot-color toner amount. The control of the K-color-toner amount specifying component 96 of the individual-toner specifying component 94 is moved from the center to the right.

Thus, in the setting screen 90 according to the present exemplary embodiment, the controls of the spot-color-toner amount specifying component 95 and the K-color-toner amount specifying component 96 of the individual-toner specifying component 94 are moved in accordance with the spot-color toner amount which is specified through operations on the toner-amount specifying component 91. A user may see the positions of the controls of the spot-color-toner amount specifying component 95 and the K-color-toner amount specifying component 96, and thus may grasp the spot-color toner amount and the K-color toner amount which are specified through operations on the toner-amount specifying component 91.

In the setting screen 90, when the check field 941 of the individual-toner specifying component 94 is selected, the spot-color toner amount may be specified separately through operations on the spot-color-toner amount specifying component 95. Similarly, in the setting screen 90, when the check field 941 of the individual-toner specifying component 94 is selected, the K-color toner amount may be specified separately through operations on the K-color-toner amount specifying component 96.

Specifically, in the individual-toner specifying component 94, when the control of the spot-color-toner amount specifying component 95 is moved to the left, a smaller spot-color toner amount is specified; when the control is moved to the right, a larger spot-color toner amount is specified. When the spot-color-toner amount specifying component 95 is operated to change the spot-color toner amount, the K-color toner amount is not changed.

Similarly, in the individual-toner specifying component 94, when the control of the K-color-toner amount specifying component 96 is moved to the left, a smaller K-color toner amount is specified; when the control is moved to the right, a larger K-color toner amount is specified. When the K-color-toner amount specifying component 96 is operated to change the K-color toner amount, the spot-color toner amount is not changed.

Back to Fig. 3, the setting screen 90 includes an area setting component 97 for setting the spot-color toner amount for a specific area, which satisfies a predetermined condition in an image, to a value, which is different from the spot-color toner amount for the other area, in accordance with properties of the specific area.

The case in which properties of a specific area in an image are to be different from those of the other area may be present. For example, as described above, when an image illustrates a human skin or the like, the image is to have good granularity, which is one of the image properties. Image granularity tends to be better as the spot-color toner amount is larger. In the present exemplary embodiment, selecting the area setting component 97 enables an increase of the spot-color toner amount in a skin area, which illustrates a human skin, as an exemplary specific area satisfying the predetermined condition in an image. This facilitates obtaining an image having user-desired properties, compared with the case in which the setting screen 90 does not include the area setting component 97.

The setting screen 90 includes an instruction component 98 which provides an instruction to generate a color conversion profile. When a user operates the instruction component 98, in the profile generating unit 40, the K-color setting unit 45 obtains information about the K-color toner amount which is specified on the setting screen 90, and the spot-color setting unit 46 obtains information about the spot-color toner amount which is specified on the setting screen 90. The profile generating unit 40 generates a color conversion profile on the basis of the obtained information about the K-color toner amount and the obtained information about the spot-color toner amount.

In the present exemplary embodiment, the toner-amount specifying component 91, the property display portion 92, the property notification 93, the individual-toner specifying component 94, the area setting component 97, and the instruction component 98, which are included in the setting screen 90, are an exemplary display image displayed on a display unit.

A process of generating a color conversion profile, which is performed by the profile generating unit 40, will be specifically described.

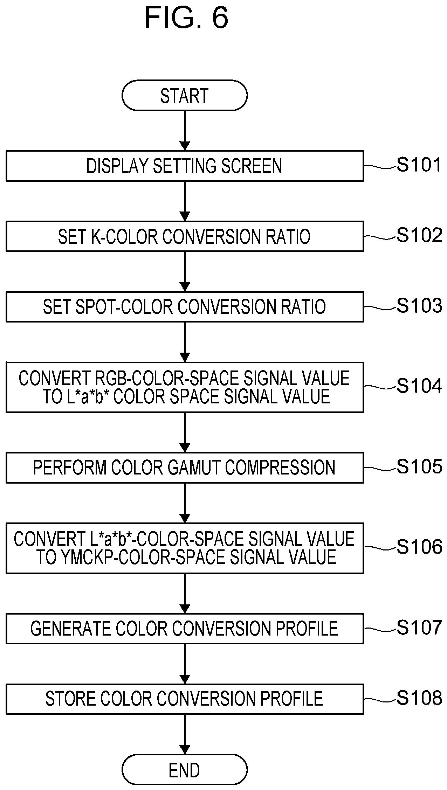

Fig. 6 is a flowchart of an exemplary process of generating a color conversion profile, which is performed by the profile generating unit 40.

The K-color setting unit 45 and the spot-color setting unit 46 of the profile generating unit 40 cause the operation/display unit 35 to display the setting screen 90 (see Fig. 3) for receiving specification of the spot-color toner amount and the K-color toner amount (step 101).

The K-color setting unit 45 obtains information about the K-color toner amount, which is specified on the setting screen 90, and sets the K-color conversion ratio on the basis of the obtained information (step 102).

The spot-color setting unit 46 obtains information about the spot-color toner amount, which is specified on the setting screen 90, and sets the spot-color conversion ratio on the basis of the obtained information (step 103).

The first conversion unit 41 converts an RGB-color-space signal value, which is to represent image data received from the input apparatus 10, to a signal value in the L*a*b* color space which is independent of the input apparatus 10 and the printer 20 (step 104).

The color-gamut compression unit 42 performs color gamut compression on the L*a*b*-color-space signal value, which is obtained through the conversion in step 104, into a signal value in the color gamut of the printer 20 in the same L*a*b* color space (step 105).

The second conversion unit 43 uses the K-color conversion ratio, which is set in step 102, and the spot-color conversion ratio, which is set in step 103, to convert the L*a*b*-color-space signal value, which is obtained through the color gamut compression in step 105, to a YMCKP-color-space signal value with which the color is reproducible by the printer 20 (step 106).

More specifically, the second conversion unit 43 uses the K-color conversion ratio, which is set in step 102, to determine a K-color signal value in the YMCKP color space. The second conversion unit 43 uses the spot-color conversion ratio, which is set in step 103, to determine a signal value of P color which is a spot color in the YMCKP color space. The second conversion unit 43 determines a Y-color signal value, an M-color signal value, and a C-color signal value in the YMCKP color space.

The profile generating unit 40 performs the processes in steps 104 to 106 on each grid point in the RGB color space.

The profile generating unit 40 generates a color conversion profile for converting RGB-color-space signal values to YMCKP-color-space signal values used by the printer 20, on the basis of the result of the processes in step 104 to step 106 on the grid points in the RGB color space (step 107).

The profile generating unit 40 stores, in the profile storage unit 33, the color conversion profile generated in step 107 (step 108), and ends the series of processes.

Thus, the color conversion apparatus 30 according to the present exemplary embodiment generates a color conversion profile in which the spot-color conversion ratio and the K-color conversion ratio are determined in accordance with properties of an image that is to be printed by the printer 20.

The color conversion unit 31 of the color conversion apparatus 30 uses the color conversion profile, which is stored in the profile storage unit 33, to perform color conversion processing on image data received from the input apparatus 10. Specifically, the color conversion unit 31 uses the color conversion profile, in which the spot-color conversion ratio and the K-color conversion ratio are determined in accordance with image properties, to convert RGB-color-space signal values, which represent image data received from the input apparatus 10, to YMCKP-color-space signal values with which the color is reproducible by the printer 20. The color conversion apparatus 30 outputs, to the printer 20, image data which is represented by the converted YMCKP-color-space signal values. The printer 20 prints an image on a sheet by using the image data which is represented by the YMCKP-color-space signal values obtained from the color conversion apparatus 30.

This facilitates achieving the state in which an image printed by the printer 20 has user-desired properties, compared with the case in which a color conversion profile, in which the spot-color conversion ratio and the K-color conversion ratio are not determined in accordance with image properties, is used to perform color conversion on image data.

In the exemplary embodiment described above, the case in which the color conversion apparatus 30 converts RGB-color-space signal values, which represent image data, to YMCKP-color-space signal values, which include P-color signal values corresponding to the amounts, to be used, of color material of P color, is described as an example.

A spot color is not limited to fluorescent pink (P) described above, and may be any as long as the spot color is different from YMCK colors which are normal colors.

Different types of spot color may be used as spot color. Specifically, the color conversion apparatus 30 may convert RGB-color-space signal values, which represent image data, to signal values in a color space including signal values of spot colors corresponding to the amounts, to be used, of color materials of multiple types of spot color. Herein, the case in which the color conversion apparatus 30 converts RGB-color-space signal values, which represent image data, to signal values of a color space including signal values of two types of spot color, which is a first spot color and a second spot color as multiple types of spot color, will be described.

In the printer 20 which prints an image by using color materials of multiple types of spot color, a printed image may be different in property depending on the amounts of use of color materials of spot colors. Specifically, an image may have different properties between the case in which the amount of use of color material of the first spot color (for example, fluorescent pink) is increased and the case in which the amount of use of color material of the second color material (for example, a metallic color) is increased.

In conversion of RGB-color-space signal values, which represent image data, to signal values in a color space including multiple types of spot color, the color conversion apparatus 30 is to individually set a first-spot-color conversion ratio, which is a ratio of conversion to a signal value of the first spot color, and a second-spot-color conversion ratio, which is a ratio of conversion to a signal value of the second spot color.

For example, in the setting screen 90 (see Fig. 3) displayed by the operation/display unit 35 (see Fig. 2), the color conversion apparatus 30 may specify individually the amount, to be used, of color material of the first spot color and the amount, to be used, of color material of the second spot color. On the basis of the amount, to be used, of color material of the first spot color and the amount, to be used, of color material of the second spot color which are specified in accordance with operations on the setting screen 90, the color conversion apparatus 30 sets the first-spot-color conversion ratio and the second-spot-color conversion ratio individually, and generates a color conversion profile.

Thus, compared with the case in which a color conversion profile is generated in such a manner that the first-spot-color conversion ratio and the second-spot-color conversion ratio are not discriminated from each other and are set uniformly, an image printed by the printer 20 is likely to have properties in accordance with the amounts of use of color materials of spot colors.

In the exemplary embodiment described above, the profile generating unit 40 of the color conversion apparatus 30 generates a color conversion profile for converting RGB-color-space signal values to YMCKP-color-space signal values with which the color is reproducible by the printer 20. However, the configuration is not limited to this. For example, the profile generating unit 40 of the color conversion apparatus 30 may generate a color conversion profile for converting L*a*b*-color-space signal values to YMCKP-color-space signal values. In this case, the color conversion apparatus 30 converts RGB-color-space signal values, which represent image data received from the input apparatus 10, to L*a*b*-color-space signal values by using another color conversion profile or the like, and then uses the color conversion profile, which is generated by the profile generating unit 40, to convert L*a*b*-color-space signal values to YMCKP-color-space signal values.

RGB-color-space signal values are used as an example of signal values representing image data received by the color conversion apparatus 30 from the input apparatus 10. However, the configuration is not limited to this. For example, signal values representing image data received by the color conversion apparatus 30 from the input apparatus 10 may be signal values expressed in a color space, such as YMCK or YMCKRGB, which is other than the RGB color space.

In the color conversion apparatus 30, the first conversion unit 41 of the profile generating unit 40 converts RGB-color-space signal values to signal values in the L*a*b* color space which is a device-independent color space. The device-independent color space is not limited to the L*a*b* color space. For example, the device-independent color space may be the XYZ color space, the Yxy color space, the L*u*v* color space, or the HLS color space.

The exemplary embodiment of the present disclosure is described. However, the technical scope of the present disclosure is not limited to the scope described in the exemplary embodiment. It is clear, from the description of the scope of claims, that an embodiment obtained by adding various changes or improvements to the exemplary embodiment is encompassed in the technical scope of the present disclosure.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

### Appendix

(((1))) A color conversion apparatus comprising:
   a processor configured to:
   in conversion of a signal value in a first color space to a signal value in a second color space, the signal value in the first color space representing an image, the signal value in the second color space including YMCK signals and at least one spot color signal, the YMCK signals corresponding to amounts, to be used, of color materials of YMCK colors, the at least one spot color signal corresponding to an amount, to be used, of color material of a spot color, the spot color being other than YMCK colors, set at least one spot-color conversion ratio in accordance with a property of an image that is to be printed by using the signal value in the second color space, the at least one spot-color conversion ratio being a ratio for converting the signal value in the first color space to the at least one spot color signal.
(((2))) The color conversion apparatus according to (((1))),
   wherein the processor is configured to:
   set a K-color conversion ratio and the at least one spot-color conversion ratio in accordance with the property of the image that is to be printed by using the signal value in the second color space, the K-color conversion ratio being a ratio for converting the signal value in the first color space to a K-color signal.
(((3))) The color conversion apparatus according to (((2))),
   wherein the processor is configured to:
   set the at least one spot-color conversion ratio and the K-color conversion ratio in conjunction with each other in accordance with the property of the image that is to be printed by using the signal value in the second color space.
(((4))) The color conversion apparatus according to (((3))),
   wherein the processor is configured to:
   when the at least one spot-color conversion ratio is changed to decrease the amount, to be used, of color material of the spot color from a predetermined reference value, change the K-color conversion ratio to increase an amount, to be used, of color material of K color.
(((5))) The color conversion apparatus according to (((3))) or (((4))),
   wherein the processor is configured to:
   when the at least one spot-color conversion ratio is changed to increase the amount, to be used, of color material of the spot color from a predetermined reference value, not change the K-color conversion ratio.
(((6))) The color conversion apparatus according to any of (((1))) to (((5))),
   wherein the at least one spot color signal comprises a plurality of spot color signals,
   wherein the at least one spot-color conversion ratio comprises a plurality of spot-color conversion ratios, and
   wherein the processor is configured to:
      in conversion of the signal value in the first color space to the signal value in the second color space, the signal value in the second color space including the YMCK signals and the plurality of spot color signals, the plurality of spot color signals corresponding to amounts, to be used, of color materials of a plurality of types of spot colors, set the plurality of spot-color conversion ratios individually in accordance with the property of the image that is to be printed by using the signal value in the second color space, the plurality of spot-color conversion ratios being ratios for converting the signal value in the first color space to the respective spot color signals.
(((7))) The color conversion apparatus according to any of (((1))) to (((6))),
   wherein the processor is configured to:
   cause a display unit to display a display image describing a correspondence between the amount, to be used, of color material of the spot color and the property of the image that is to be printed by using the signal value in the second color space, the display unit displaying information.
(((8))) The color conversion apparatus according to (((7))),
   wherein the processor is configured to:
   obtain information about the amount, to be used, of color material of the spot color in accordance with an operation on the display image; and
   set the at least one spot-color conversion ratio on a basis of the amount, to be used, of color material of the spot color.
(((9))) The color conversion apparatus according to (((8))),
   wherein the processor is configured to:
   after an amount, to be used, of color material of K color is set in conjunction with the amount, to be used, of color material of the spot color which has been obtained in accordance with the operation on the display image, set the amount, to be used, of color material of the spot color or the amount, to be used, of color material of K color separately in accordance with the operation on the display image;
   set the at least one spot-color conversion ratio on a basis of the amount, to be used, of color material of spot color; and
   set a K-color conversion ratio on a basis of the amount, to be used, of color material of K color, the K-color conversion ratio being a ratio for converting the signal value in the first color space to a K-color signal.
(((10))) The color conversion apparatus according to any of (((1))) to (((9))),
   wherein the processor is configured to:
   set the at least one spot-color conversion ratio in accordance with a property of a specific area in the image that is to be printed by using the signal value in the second color space, the specific area satisfying a predetermined condition, the at least one spot-color conversion ratio being used to convert the signal value in the first color space to the at least one spot color signal, the signal value in the first color space representing the specific area.
(((11))) A color-conversion-table generating apparatus comprising:
   a processor configured to:
   generate a color conversion table, the color conversion table being used to convert a signal value in a first color space to a signal value in a second color space, the signal value in the first color space representing an image, the signal value in the second color space including YMCK signals and a spot color signal, the YMCK signals corresponding to amounts, to be used, of color materials of YMCK colors, the spot color signal corresponding to an amount, to be used, of color material of spot color, the spot color being other than the YMCK colors, the color conversion table being a table in which a spot-color conversion ratio is determined in accordance with a property of an image that is to be printed by using the signal value in the second color space, the spot-color conversion ratio being a ratio for converting the signal value in the first color space to the spot color signal.
(((12))) A program causing a computer to execute a process comprising:
   in conversion of a signal value in a first color space to a signal value in a second color space, the signal value in the first color space representing an image, the signal value in the second color space including YMCK signals and a spot color signal, the YMCK signals corresponding to amounts, to be used, of color materials of YMCK colors, the spot color signal corresponding to an amount, to be used, of color material of a spot color, the spot color being other than YMCK colors, setting a spot-color conversion ratio in accordance with a property of an image that is to be printed by using the signal value in the second color space, the spot-color conversion ratio being a ratio for converting the signal value in the first color space to the spot color signal.

Compared with the case in which the conversion ratio for converting signal values in the first color space to spot color signals in signal values in the second color space is uniform, the color conversion apparatus according to (((1))) facilitates obtaining images having user-desired properties.

Compared with the case in which the conversion ratio for converting signal values in the first color space to K-color signals in signal values in the second color space is uniform, the color conversion apparatus according to (((2))) facilitates obtaining an image having user-desired properties.

Compared with the case in which the spot-color conversion ratio and the K-color conversion ratio are set so as not to be in conjunction with each other, the color conversion apparatus according to (((3))) enables an image, which has user-desired properties, to be obtained with a simpler operation.

Compared with the case in which, when the spot-color conversion ratio is changed so that the amount, to be used, of color material of the spot color is decreased from the reference value, the K-color conversion ratio is changed so that the amount, to be used, of color material of K color is decreased, the color conversion apparatus according to (((4))) facilitates improving image light fastness and cost required for image printing, which serve as image properties.

Compared with the case in which, when the spot-color conversion ratio is changed so that the amount, to be used, of color material of the spot color is increased from the reference value, the K-color conversion ratio is changed so that the amount, to be used, of color material of K color is increased, the color conversion apparatus according to (((5))) facilitates improving image granularity serving as an image property.

Compared with the case in which multiple spot-color conversion ratios are set uniformly, the color conversion apparatus according to (((6))) facilitates obtaining an image having user-desired properties.

Compared with the case in which correspondences between the amount, to be used, of color material of the spot color and image properties are not displayed by the display unit, the color conversion apparatus according to (((7))) facilitates a user's grasp of the difference in image property due to change of the amount, to be used, of color material of the spot color.

The color conversion apparatus according to (((8))) enables a user to set the amount, to be used, of color material of the spot color through operations on a display image while the user sees correspondences between the amount, to be used, of color material of the spot color and image properties, which are displayed by the display unit.

Compared with the case in which information about the amount, to be used, of color material of the spot color and information about the amount, to be used, of color material of K color are not obtained individually, the color conversion apparatus according to (((9))) facilitates obtaining an image having user-desired properties.

Compared with the case in which the spot-color conversion ratio for converting signal values in the first color space, which represent a specific area, to spot color signals is not set in accordance with the properties of the specific area, the color conversion apparatus according to (((10))) facilitates obtaining an image having user-desired properties.

Compared with the case in which the conversion ratio for converting signal values in the first color space to spot color signals in signal values in the second color space is uniform, the color-conversion-table generating apparatus according to (((11))) facilitates obtaining an image having user-desired properties.

Compared with the case in which the conversion ratio for converting signal values in the first color space to spot color signals in signal values in the second color space is uniform, the program according to (((12))) facilitates obtaining an image having user-desired properties.

## Claims

1. A color conversion apparatus comprising:
a processor configured to:
in conversion of a signal value in a first color space to a signal value in a second color space, the signal value in the first color space representing an image, the signal value in the second color space including YMCK signals and at least one spot color signal, the YMCK signals corresponding to amounts, to be used, of color materials of YMCK colors, the at least one spot color signal corresponding to an amount, to be used, of color material of a spot color, the spot color being other than YMCK colors, set at least one spot-color conversion ratio in accordance with a property of an image that is to be printed by using the signal value in the second color space, the at least one spot-color conversion ratio being a ratio for converting the signal value in the first color space to the at least one spot color signal.

2. The color conversion apparatus according to claim 1,
wherein the processor is configured to:
set a K-color conversion ratio and the at least one spot-color conversion ratio in accordance with the property of the image that is to be printed by using the signal value in the second color space, the K-color conversion ratio being a ratio for converting the signal value in the first color space to a K-color signal.

3. The color conversion apparatus according to claim 2,
wherein the processor is configured to:
set the at least one spot-color conversion ratio and the K-color conversion ratio in conjunction with each other in accordance with the property of the image that is to be printed by using the signal value in the second color space.

4. The color conversion apparatus according to claim 3,
wherein the processor is configured to:
when the at least one spot-color conversion ratio is changed to decrease the amount, to be used, of color material of the spot color from a predetermined reference value, change the K-color conversion ratio to increase an amount, to be used, of color material of K color.

5. The color conversion apparatus according to claim 3 or 4,
wherein the processor is configured to:
when the at least one spot-color conversion ratio is changed to increase the amount, to be used, of color material of the spot color from a predetermined reference value, not change the K-color conversion ratio.

6. The color conversion apparatus according to any one of claims 1 to 5,
wherein the at least one spot color signal comprises a plurality of spot color signals,
wherein the at least one spot-color conversion ratio comprises a plurality of spot-color conversion ratios, and
wherein the processor is configured to:
in conversion of the signal value in the first color space to the signal value in the second color space, the signal value in the second color space including the YMCK signals and the plurality of spot color signals, the plurality of spot color signals corresponding to amounts, to be used, of color materials of a plurality of types of spot color, set the plurality of spot-color conversion ratios individually in accordance with the property of the image that is to be printed by using the signal value in the second color space, the plurality of spot-color conversion ratios being ratios for converting the signal value in the first color space to the respective spot color signals.

7. The color conversion apparatus according to any one of claims 1 to 6,
wherein the processor is configured to:
cause a display unit to display a display image describing a correspondence between the amount, to be used, of color material of the spot color and the property of the image that is to be printed by using the signal value in the second color space, the display unit displaying information.

8. The color conversion apparatus according to claim 7,
wherein the processor is configured to:
obtain information about the amount, to be used, of color material of the spot color in accordance with an operation on the display image; and
set the at least one spot-color conversion ratio on a basis of the amount, to be used, of color material of the spot color.

9. The color conversion apparatus according to claim 8,
wherein the processor is configured to:
after an amount, to be used, of color material of K color is set in conjunction with the amount, to be used, of color material of the spot color which has been obtained in accordance with the operation on the display image, set the amount, to be used, of color material of the spot color or the amount, to be used, of color material of K color separately in accordance with an operation on the display image;
set the at least one spot-color conversion ratio on a basis of the amount, to be used, of color material of the spot color; and
set a K-color conversion ratio on a basis of the amount, to be used, of color material of K color, the K-color conversion ratio being a ratio for converting the signal value in the first color space to a K-color signal.

10. The color conversion apparatus according to any one of claims 1 to 9,
wherein the processor is configured to:
set the at least one spot-color conversion ratio in accordance with a property of a specific area in the image that is to be printed by using the signal value in the second color space, the specific area satisfying a predetermined condition, the at least one spot-color conversion ratio being used to convert the signal value in the first color space to the at least one spot color signal, the signal value in the first color space representing the specific area.

11. A color-conversion-table generating apparatus comprising:
a processor configured to:
generate a color conversion table, the color conversion table being used to convert a signal value in a first color space to a signal value in a second color space, the signal value in the first color space representing an image, the signal value in the second color space including YMCK signals and a spot color signal, the YMCK signals corresponding to amounts, to be used, of color materials of YMCK colors, the spot color signal corresponding to an amount, to be used, of color material of spot color, the spot color being other than the YMCK colors, the color conversion table being a table in which a spot-color conversion ratio is determined in accordance with a property of an image that is to be printed by using the signal value in the second color space, the spot-color conversion ratio being a ratio for converting the signal value in the first color space to the spot color signal.

12. A program causing a computer to execute a process comprising:
in conversion of a signal value in a first color space to a signal value in a second color space, the signal value in the first color space representing an image, the signal value in the second color space including YMCK signals and a spot color signal, the YMCK signals corresponding to amounts, to be used, of color materials of YMCK colors, the spot color signal corresponding to an amount, to be used, of color material of a spot color, the spot color being other than YMCK colors, setting a spot-color conversion ratio in accordance with a property of an image that is to be printed by using the signal value in the second color space, the spot-color conversion ratio being a ratio for converting the signal value in the first color space to the spot color signal.

13. A method comprising:
in conversion of a signal value in a first color space to a signal value in a second color space, the signal value in the first color space representing an image, the signal value in the second color space including YMCK signals and a spot color signal, the YMCK signals corresponding to amounts, to be used, of color materials of YMCK colors, the spot color signal corresponding to an amount, to be used, of color material of a spot color, the spot color being other than YMCK colors, setting a spot-color conversion ratio in accordance with a property of an image that is to be printed by using the signal value in the second color space, the spot-color conversion ratio being a ratio for converting the signal value in the first color space to the spot color signal.
